# FASCICULE DE BREVET EUROPEEN

(11) **EP 0 378 492 B1**
(45) Date de publication et mention de la délivrance du brevet: **31.03.1993**
(21) Numéro de dépôt: 90420014.4
(22) Date de dépôt: 09.01.1990
(51) Int. Cl.: A22C 21/00

(54) **Dispositif pour la coupe du cou d'une volaille**
Vorrichtung zum Entfernen der Hälse von Geflügel
Device for cutting the necks of poultry

(30) Priorité: 13.01.1989 FR 8900570
(43) Date de publication de la demande: 18.07.1990
(73) Titulaire: ETABLISSEMENTS ARRIVE S.A. (Société Anonyme de droit français), F-85250 Saint Fulgent (FR); UNION FINANCIERE POUR LE DEVELOPPEMENT DE L'ECONOMIE CEREALIERE-UNIGRAINS (Société Anonyme de droit français), F-75016 Paris (FR)
(72) Inventeur: Villemin, Daniel, F-94430 Chennevières S/ Marne (FR); Plusa, Janusz, F-94370 Sucy en Brie (FR)
(74) Mandataire: Maureau, Philippe

(56) Documents cités:
- NL-A- 7 904 779
- US-A- 3 203 036
- US-A- 3 233 280
- US-A- 3 623 186
- US-A- 3 665 553
- US-A- 3 750 231
- US-A- 3 965 534
- US-A- 4 097 960
- US-A- 4 532 676

## Description

La présente invention a pour objet un dispositif pour la coupe du cou d'une volaille, soit sur une chaîne d'abattage, soit une chaîne de découpe.

Les volailles comestibles, de grosse taille, et notamment les dindes, qui sont rarement vendues entières, sont découpées après abattage en un certain nombre de morceaux conditionnés indépendamment les uns des autres.

Dans le cas d'une dinde, par exemple, après que les abats aient été retirés par un orifice naturel et/ou par une incision ménagée dans la partie postérieure de l'animal, celui-ci est ressué, puis il est suspendu à une chaîne dont le déplacement assure l'amenée de la carcasse à un certain nombre de postes où les différents morceaux sont désossés et découpés manuellement par des opérateurs. Ce traitement nécessite une main-d'oeuvre importante tout en présentant l'inconvénient que la qualité de la découpe dépend de l'habileté de l'opérateur, et qu'une quantité non négligeable de viande reste accrochée à la carcasse en fin de traitement, ce qui constitue une perte pour le conditionneur. Il faut en effet considérer que le squelette osseux d'une volaille ne possède pas une surface extérieure parfaitement convexe, mais comporte également, compte tenu de la morphologie de l'animal, des parties en creux hors desquelles il n'est pas aisé de retirer la viande qui y est logée.

Lorsque la présence du cou de la volaille n'est pas nécessaire, par exemple lorsque la découpe est effectuée, la volaille suspendue par les pattes, il est procédé à la coupe du cou approximativement au point d'articulation des ailes et des coracoïdes, ce qui laisse sur la carcasse une partie non négligeable du cou, et diminue donc la valorisation possible de l'ensemble des produits.

Le document US-A-3 203 036 concerne un dispositif pour la coupe de la tête d'une volaille comportant les caractéristiques du préambule de la revendication 1 et comprenant un support évidé pour l'appui du cou de la volaille, perpendiculairement au fond duquel est montée coulissante une lame formant guillotine.

Afin de rationnaliser la découpe des volailles, il a été imaginé de fixer chaque volaille sur un dispositif de contention par l'intérieur, par exemple tel que celui décrit dans le brevet français 85 08275 au nom de la Demanderesse, puis à déplacer ce dispositif au niveau des différents postes de découpe. Cette solution permet de disposer d'un support rigide de la carcasse permettant une automatisation d'au moins certaines opérations de découpe, ce qui n'est pas possible dans le cas où la volaille est suspendue par la tête et le cou. Dans ces conditions, la présence du cou n'offrant non seulement aucun avantage, mais constituant au contraire une gêne au cours des diverses manipulations, il est apparu opportun de procéder à la coupe du cou, avant découpe de la volaille.

La présente invention concerne un dispositif permettant de réaliser une telle coupe de façon précise et nette, dans d'excellentes conditions de rapidité.

A cet effet, le dispositif qu'elle concerne, du type comprenant une matrice présentant, dans l'une de ses faces latérales un évidement en forme générale de U, destiné au passage du cou de la volaille, est caractérisé en ce que l'évidement est agencé par rapport à l'outil de contention de manière que le cou de la volaille pende de haut en bas, le corps de la volaille étant situé du côté de la partie centrale de la matrice opposé à celui duquel sont situées les deux branches de celle-ci, et un poinçon présentant une partie de section complémentaire de celle de l'évidement de la matrice, associée à des moyens assurant son déplacement perpendiculairement au plan dans lequel l'ouverture de la matrice forme un U pour permettre son engagement dans cette dernière.

Ainsi, après positionnement d'une volaille de telle sorte que la base de son cou soit en appui dans l'évidement de la matrice, la tête pendant en-dessous de celle-ci, et le poinçon se trouvant en position haute, il est procédé à un déplacement vers le bas de celui-ci réalisant, lors de sa pénétration dans la matrice, une coupe nette du cou.

Selon une caractéristique de l'invention, dans la mesure où la volaille est présentée sur un dispositif de contention horizontal et avec le dos tourné vers le bas, le plan de l'ouverture de la matrice est incliné par rapport à l'horizontale, les branches de la matrice étant situées plus bas que la partie centrale de celle-ci. Cet agencement permet, compte tenu de l'arrondi que forme le cou lors de son passage dans la matrice, de réaliser une coupe sensiblement perpendiculaire au cou, grâce à l'inclinaison de la matrice et à l'inclinaison de l'axe de déplacement du poinçon.

En outre, compte tenu de la structure de ce dispositif, le point de référence de la position de la matrice et du poinçon est déterminé par le creux en V formé par les os coracoïdes. Le poinçon venant se loger systématiquement dans le fond de ce V, quelle que soit la taille de la volaille, permet une coupe du cou véritablement à la base de celui-ci, permettant une valorisation maximale. En outre, la profondeur de la zone de coupe facilite les opérations ultérieures de découpe de la volaille.

Avantageusement, la matrice, le poinçon et les moyens d'actionnement de ce dernier sont montés sur un chariot déplaçable sur un support dans une direction parallèle à l'axe de contention de la volaille, entre une position dans laquelle la matrice est écartée de cette dernière et une position dans laquelle la matrice est au contact de la base du cou de la volaille.

Les moyens de commande de l'arrêt de l'avance du chariot sont constitués par un capteur de détection d'une pression limite prédéterminée à l'intérieur du vérin de déplacement du chariot.

Ainsi, il est assuré un excellent contact entre la matrice et la carcasse de la volaille, favorisant la coupe à la base du cou.

Dans un premier temps, la matrice est écartée de la volaille et le cou de cette dernière y est positionné. L'ensemble mobile est alors déplacé en direction de la volaille, jusqu'à venir en appui contre cette dernière, avant actionnement du poinçon.

Afin de permettre le réglage de l'inclinaison de la matrice et du poinçon, le support du chariot est monté pivotant sur le bâti, autour d'un axe perpendiculaire à la direction de déplacement du chariot, les moyens de réglage de l'inclinaison étant constitués par un vérin dont le corps est articulé sur le bâti et dont la tige est articulée sur le support.

Dans la mesure où le dispositif de contention est monté sur un carrousel, il convient, lors de la rotation de celui-ci assurant l'amenée d'une volaille au dispositif de coupe du cou, de guider ce dernier pour réaliser son positionnement dans la matrice.

A cet effet, le dispositif comprend du côté de l'amenée des volailles, un guide allongé, dont l'extrémité située du côté de la matrice est disposée à proximité de l'ouverture de celle-ci, et dont l'autre extrémité est située sur la trajectoire selon laquelle se déplace le cou d'une volaille lors de son amenée au dispositif de coupe du cou.

Conformément à une autre caractéristique de l'invention, le chariot sur lequel sont montés le poinçon et la matrice est en outre équipé, à son extrémité située du côté de la volaille, de deux couteaux parallèles, tournés vers le haut, et déplaçables verticalement par un vérin.

Ces deux couteaux servent, lors du déplacement du chariot, à réaliser, de part et d'autre de la colonne vertébrale, des incisions facilitant les opérations ultérieures de découpe et notamment l'arrachement des ailes.

Les moyens de commande de ce dispositif sont tels que, partant d'une position dans laquelle l'ensemble mobile est en position écartée de la volaille, il est procédé successivement à la détection de la présence d'une volaille, à l'avance de l'ensemble mobile en direction de la volaille jusqu'au contact de celle-ci, à la descente du poinçon réalisant la coupe du cou, à la montée des couteaux inférieurs, au recul de l'ensemble mobile avec réalisation des incisions dorsales, à la montée du poinçon et enfin à la descente des couteaux.

De toute façon, l'invention sera bien comprise à l'aide de la description qui suit en référence au dessin schématique annexé représentant, à titre d'exemple non limitatif, une forme d'exécution de ce dispositif :
Figure 1 en est une vue de côté au cours d'une première phase de fonctionnement ;
Figure 2 en est une vue partielle de côté, partiellement en coupe, au cours d'une seconde phase de fonctionnement ;
Figures 3 et 4 sont deux vues de dessus au cours de deux phases de fonctionnement du dispositif de coupe proprement dit.

Le dispositif représenté au dessin comprend un bâti fixe 2 à la partie supérieure duquel est articulé autour d'un axe horizontal 3, un support 4 dont la longueur est orientée transversalement à l'axe 3. Le support peut être incliné par rapport à l'axe 3 par actionnement d'un vérin 5. Sur le support 4 sont montées des colonnes longitudinales 6 servant au guidage d'un chariot 7 déplaçable à l'aide d'un vérin 8. La valeur du déplacement du chariot 7 sur le support 4 peut être contrôlée à l'aide d'un détecteur de pression 9. Sur le chariot 7 est fixée une matrice 10 présentant sur l'une de ses faces latérales un évidement 12 en forme générale de U. Dans la forme d'exécution représentée au dessin, l'évidement 12 est tourné du côté du support 4 comportant le vérin de déplacement 8, et est incliné par rapport à l'horizontale, les branches 13 de la matrice étant situées plus bas que la partie centrale 14 de celle-ci. Une volaille 15 montée sur un outil de contention dont l'axe 16 est représenté au dessin, est destinée à être positionnée du côté de la matrice opposé à celui à partir duquel s'étendent les branches 13, la volaille étant placée de telle sorte que sa colonne vertébrale 17 soit tournée vers le bas, son cou 18 étant destiné à reposer sur la matrice et à pendre au-delà de cette dernière. Sur le chariot 7 est également monté un bâti 19 portant un ensemble guidé perpendiculairement au plan d'ouverture de la matrice, et comprenant notamment un poinçon 20 présentant une partie complémentaire de celle de l'évidement 12 de la matrice. Ce poinçon est monté à l'extrémité de la tige d'un vérin 22. Dans la mesure où la volaille 15 est amenée latéralement, il convient de guider le cou 18 pour assurer son positionnement dans la matrice. Ce guidage est réalisé par l'intermédiaire d'un guide allongé 23, dont l'extrémité située du côté de la matrice et disposée à proximité de l'ouverture de celle-ci, et dont l'autre extrémité est située sur la trajectoire selon laquelle se déplace le cou d'une volaille, lors de son amenée au dispositif de coupe.

Le chariot 7 est en outre équipé, à son extrémité située du côté de la volaille, de deux couteaux parallèles 24, tournés vers le haut, déplaçables verticalement par un vérin 25 entre une position dans laquelle ils sont situés en dessous du dos de la volaille, et une position dans laquelle ils sont susceptibles d'inciser celle-ci.

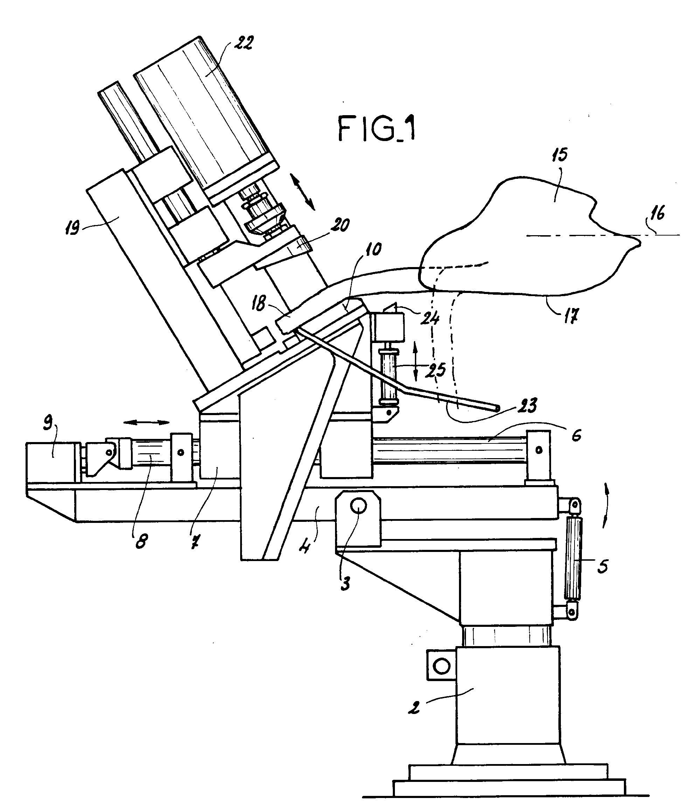

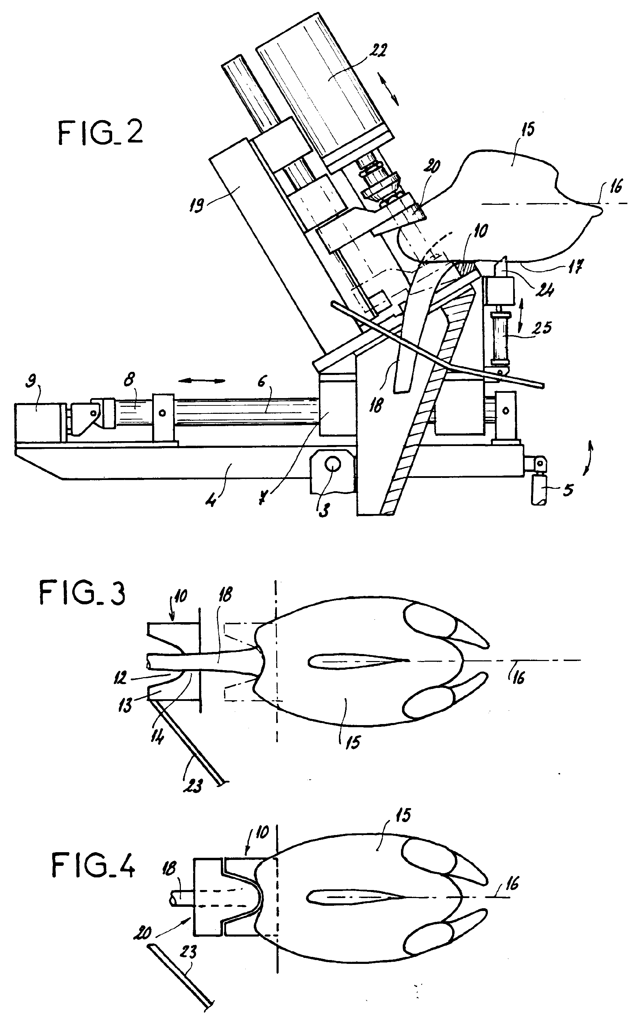

Le fonctionnement de ce dispositif est le suivant :
L'ensemble mobile étant en position reculée, représentée à la figure 1, la volaille est amenée en regard du poste de travail, son cou étant guidé par l'élément 23 afin de s'engager dans l'évidement 12 de la matrice 10, comme montré en traits pleins à la figure 3. L'ensemble mobile est alors déplacé en direction de la volaille, et vient occuper la position représentée à la figure 2, et en traits mixtes à la figure 3. Le poinçon est alors déplacé vers le bas, mouvement au cours duquel est réalisée la coupe du cou par interpénétration du poinçon et de la matrice, comme montré à la figure 4. Les couteaux de coupe dorsale 24 sont alors déplacés vers le haut, afin d'inciser la peau et les tendons de part et d'autre de la colonne vertébrale, au cours du mouvement de retour de l'ensemble mobile vers sa position de départ. Enfin, les couteaux 24 sont escamotés et le poinçon 20 est ramené en position haute, avant évacuation de la volaille, et mise en place d'une autre volaille.

Les couteaux 24 ne se justifient que pour une découpe ultérieure de la volaille, et ne sont d'aucune utilité, voire défavorables, si la coupe du cou est effectuée sur une chaîne d'abattage.

Comme il ressort de ce qui précède, l'invention apporte une grande amélioration à la technique existante en fournissant un dispositif de conception simple, susceptible d'assurer rapidement et de façon très nette la coupe du cou d'une volaille. Ce dispositif peut être utilisé seul, ou peut être associé à un ensemble plus complexe de découpe automatique de volailles.

## Revendications

1. Dispositif pour la coupe du cou d'une volaille, du type comprenant une matrice (10) présentant, dans l'une de ses faces latérales, un évidement (12) en forme générale de U, destiné au passage du cou de la volaille, caractérisé en ce que l'évidement (12) est agencé par rapport à un outil de contention de manière que le cou de la volaille pende de haut en bas, le corps de la volaille étant situé du côté de la partie centrale (14) de la matrice opposé à celui duquel sont situées les deux branches (13) de celle-ci, et un poinçon (20) présentant une partie de section complémentaire de celle de l'évidement (12) de la matrice, associée à des moyens (22) assurant son déplacement perpendiculairement au plan dans lequel l'ouverture de la matrice forme un U, pour permettre son engagement dans cette dernière.

2. Dispositif selon la revendication 1, caractérisé en ce que dans la mesure où la volaille est présentée sur un dispositif de contention horizontal et avec le dos tourné vers le bas, le plan de l'ouverture de la matrice (10) est incliné par rapport à l'horizontale, les branches (13) de la matrice étant situées plus bas que la partie centrale (14) de celle-ci.

3. Dispositif selon l'une quelconque des revendications 1 et 2, caractérisé en ce que la matrice (10), le poinçon (20) et les moyens d'actionnement (22) de ce dernier sont montés sur un chariot (7) déplaçable sur un support (4) dans une direction parallèle à l'axe de contention (16) de la volaille, entre une position dans laquelle la matrice (10) est écartée de cette dernière et une position dans laquelle la matrice (10) est au contact de la base du cou (18) de la volaille.

4. Dispositif selon l'une quelconque des revendications 1 à 3, caractérisé en ce que les moyens de commande de l'arrêt de l'avance du chariot (7) sont constitués par un capteur (9) de détection d'une pression limite prédéterminée à l'intérieur du vérin (8) de déplacement du chariot.

5. Dispositif selon l'ensemble des revendications 2 à 4, caractérisé en ce que le support (4) du chariot (7) est monté pivotant sur le bâti (2), autour d'un axe (3) perpendiculaire à la direction de déplacement du chariot, les moyens de réglage de l'inclinaison étant constitués par un vérin (5) dont le corps est articulé sur le bâti (2), et dont la tige est articulée sur le support (4).

6. Dispositif selon l'une quelconque des revendications 1 à 5, caractérisé en ce qu'il comprend du côté de l'amenée des volailles, un guide allongé (23), dont l'extrémité située du côté de la matrice (10) est disposée à proximité de l'ouverture de celle-ci, et dont l'autre extrémité est située sur la trajectoire selon laquelle se déplace le cou (18) d'une volaille (15) lors de son amenée au dispositif de coupe du cou.

7. Dispositif selon l'une quelconque des revendications 1 à 6, caractérisé en ce que le chariot (7) sur lequel sont montés le poinçon (20) et la matrice (10) est en outre équipé, à son extrémité située du côté de la volaille, de deux couteaux (24) parallèles, tournés vers le haut, et déplaçables verticalement par un vérin (25).

8. Dispositif selon l'ensemble des revendications 1 à 7, caractérisé en ce que ses moyens de commande sont tels que, partant d'une position dans laquelle l'ensemble mobile est en position écartée de la volaille, il est procédé successivement à la détection de la présence d'une volaille, à l'avance de l'ensemble mobile en direction de la volaille jusqu'au contact de celle-ci, à la descente du poinçon (20) réalisant la coupe du cou (18), à la montée des couteaux inférieurs (24), au recul de l'ensemble mobile avec réalisation des incisions dorsales, à la montée du poinçon (20) et enfin à la descente des couteaux (24).

## Patentansprüche

1. Einrichtung zum Abtrennen des Halses eines Geflügels, umfassend eine Matrize (10), welche an einer ihrer Seitenflächen eine Ausnehmung (12) mit einer allgemeinen U-Form hat, durch die der Hals des Geflügels hindurchtreten soll, dadurch **gekennzeichnet**, daß die Ausnehmung (12) gegenüber einem Haltewerkzeug so angeordnet ist, daß der Hals des Geflügels von oben nach unten hängt, wobei der Geflügelkörper auf der Seite des Zentralteils (14) der Matrize angeordnet ist, die der Seite abgewandt ist, auf der die beiden Arme (13) derselben angeordnet sind, und daß ein Stempel (20) vorgesehen ist, welcher einen Teil mit einem Querschnitt hat, der komplementär zu dem der Ausnehmung (12) der Matrize ist und der Mitteln (22) zugeordnet ist, die dessen Verstellung senkrecht zu der Ebene bewirken, in der die Öffnung der Matrize ein U bildet, so daß er in Schneideingriff mit der letzteren kommen kann.

2. Einrichtung nach Anspruch 1, dadurch **gekennzeichnet**, daß für den Fall, daß das Geflügel auf einer horizontalen Halteeinrichtung und mit dem Rücken nach unten dargeboten wird, die Ebene der Öffnung der Matrize (10) gegenüber der Horizontalen geneigt ist, wobei die Arme (13) der Matrize tiefer liegen als der Zentralteil (14) derselben.

3. Einrichtung nach einem der Ansprüc e 1 und 2, dadurch **gekennzeichnet**, daß die Matrize (10), der Stempel (20) und die Betätigungsmittel (22) für den letzteren auf einem Schlitten (7) montiert sind, welcher auf einem Support (4) in einer parallel zur Halteachse (16) des Geflügels liegenden Richtung zwischen einer Position verfahrbar ist, in der die Matrize (10) von der letzteren einen Abstand hat, sowie einer Position, bei der die Matrize (10) in Kontakt mit dem Ansatz des Halses (18) des Geflügels ist.

4. Einrichtung nach einem der Ansprüche 1 bis 3, dadurch **gekennzeichnet**, daß die Steuermittel zum Stoppen der Vorschubbewegung des Schlittens (7) durch einen Meßaufnehmer (9) zum Erfassen eines vorgegebenen Grenzdruckes im Inneren des Stellantriebes (8) für die Verstellung des Schlittens gebildet sind.

5. Einrichtung nach der Gesamtheit der Ansprüche 2 bis 4, dadurch **gekennzeichnet**, daß der Support (4) des Schlittens (7) auf dem Grundgestell (2) um eine Achse (3) schwenkbar montiert ist, die senkrecht zur Verstellrichtung des Schlittens steht, wobei die Mittel zum Einstellen der Neigung durch einen Stellantrieb (5) gebildet sind, dessen Hauptkörper am Grundgestell (2) und dessen Schubstange am Support (4) gelenkig angeordnet sind.

6. Einrichtung nach einem der Ansprüche 1 bis 5, dadurch **gekennzeichnet**, daß sie auf der Zuführseite für das Geflügel eine längliche Führung (23) aufweist, deren auf der Seite der Matrize (10) befindliches Ende in der Nähe der Öffnung derselben angeordnet ist und dessen anderes Ende in der Bahn liegt, auf der sich der Hals (18) eines Geflügels (15) beim Zuführen zur Einrichtung zum Abtrennen des Halses bewegt.

7. Einrichtung nach einem der Ansprüche 1 bis 6, dadurch **gekennzeichnet**, daß der Schlitten (7), auf welchem der Stempel (20) und die Matrize (10) montiert sind, außerdem an seinem dem Geflügel zugewandten Ende mit zwei parallelen Messern (24) bestückt ist, die nach oben gerichtet und mittels eines Stellantriebes (25) vertikal verstellbar sind.

8. Einrichtung nach der Gesamtheit der Ansprüche 1 bis 7, dadurch **gekennzeichnet**, daß deren Steuermittel so ausgelegt sind, daß, ausgehend von einer Position, bei der die bewegliche Anordnung sich in einer vom Geflügel fernen Stellung befindet, aufeinanderfolgend das Vorhandensein eines Geflügels festgestellt wird, sodann die bewegliche Anordnung in Richtung zum Geflügel bis zu einem Kontakt mit demselben vorgefahren wird, daß der Stempel (20) abgesenkt und der Hals (18) abgetrennt wird, daß die unteren Messer (24) angehoben werden, daß die bewegliche Anordnung unter Ausführung von Rückeneinschnitten zurückgefahren wird, daß der Stempel (20) wieder angehoben und daß schließlich die Messer (24) wieder abgesenkt werden.

## Claims

1. Device for cutting the neck of a fowl, of the type comprising a die (10) having, in one of its lateral faces, a recess (12) with an overall U-shape, intended for the neck of the fowl to pass through, characterised in that the recess (12) is arranged with respect to a holding device so that the neck of the fowl hangs downwards, the body of the fowl being situated on the side of the central part (14) of the die opposite to the one where the two arms (13) of the latter are situated, and a punch (20) having a part with a cross section complementary to the recess (12) in the die, associated with means (22) for moving it perpendicularly to the plane in which the opening of the die forms a U so as to enable it to engage in the latter.

2. Device according to Claim 1, characterised in that, since the fowl is presented on a horizontal holding device with its back oriented downwards, the plane of the opening in the die (10) is inclined with respect to the horizontal, the arms (13) of the die being situated lower than the central part (14) of the latter.

3. Device according to either one of Claims 1 or 2, characterised in that the die (10), the punch (20) and the means (22) of actuating the latter are mounted on a carriage (7) movable on a support (4) in a direction parallel to the fowl holding axis (16), between a position in which the die (10) is away from the fowl and a position in which the die (10) is in contact with the base of the neck (18) of the fowl.

4. Device according to any one of Claims 1 to 3, characterised in that the means of controlling the stopping of the forward movement of the carriage (7) consist of a sensor (9) detecting a predetermined limit pressure inside the ram (8) moving the carriage.

5. Device according to Claims 2 to 4 as a whole, characterised in that the support (4) for the carriage (7) is mounted so as to pivot on the base (2), about an axis (3) perpendicular to the direction of movement of the carriage, the means for adjusting the inclination consisting of a ram (5), the body of which is articulated on the base (2) and the stem of which is articulated on the support (4).

6. Device according to any one of Claims 1 to 5, characterised in that it comprises, on the side where the fowls are brought in, an elongate guide (23), the end of which that is situated on the die (10) side is disposed close to the opening in the latter, and the other end of which is situated on the path along which the neck (18) of a fowl (15) moves when it is brought to the neck cutting device.

7. Device according to any one of Claims 1 to 6, characterised in that the carriage (7) on which the punch (20) and die (10) are mounted is also equipped, at its end situated on the fowl side, with two parallel blades (24), oriented upwards and movable vertically by means of a ram (25).

8. Device according to Claims 1 to 7 as a whole, characterised in that the control means are such that, starting from a position in which the movable assembly is in a position away from the fowl, successive steps are effected consisting of the detection of the presence of a fowl, the movement of the movable assembly in the direction of the fowl until it comes into contact with it, the lowering of the punch (20) effecting the cutting of the neck (18), the raising of the bottom blades (24), the withdrawal of the movable assembly with the effecting of the dorsal incisions, the raising of the punch (20) and finally the lowering of the blades (24).
